(19) Europäisches Patentamt
European Patent Office
Office européen des brevets

(11) **EP 1 310 768 B1**

(12) **FASCICULE DE BREVET EUROPEEN**

(45) Date de publication et mention
de la délivrance du brevet:
**09.07.2008 Bulletin 2008/28**

(51) Int Cl.:
***G01C 23/00*** *(2006.01)*    ***B64D 43/00*** *(2006.01)*
***G05D 1/06*** *(2006.01)*

(21) Numéro de dépôt: **02292338.7**

(22) Date de dépôt: **24.09.2002**

(54) **Procédé et dispositif pour afficher un vecteur vitesse d'un aéronef**

Verfahren und Vorrichtung zur Anzeige des Geschwindigkeitsvektors eines Flugzeugs

Method and device for displaying a velocity vector of an aircraft

(84) Etats contractants désignés:
**AT BE BG CH CY CZ DE DK EE ES FI FR GB GR IE IT LI LU MC NL PT SE SK TR**

(30) Priorité: **08.11.2001 FR 0114450**

(43) Date de publication de la demande:
**14.05.2003 Bulletin 2003/20**

(73) Titulaire: **AIRBUS France
31060 Toulouse (FR)**

(72) Inventeurs:
• **Godard, Eric
31500 Toulouse (FR)**
• **Chabe, David
31400 Toulouse (FR)**

(74) Mandataire: **Hauer, Bernard
Cabinet Bonnétat
29, Rue de Saint-Pétersbourg
75008 Paris (FR)**

(56) Documents cités:
**EP-A- 0 366 164**

**Description**

La présente invention concerne un procédé et un dispositif pour afficher un vecteur vitesse d'un aéronef.

On sait que l'affichage d'un vecteur vitesse qui est destiné à indiquer le point de l'espace vers lequel se dirige l'aéronef (sans toutefois être représentatif de l'amplitude de la vitesse) peut, notamment, être réalisé sur un écran de visualisation de la planche de bord de l'aéronef ou d'un viseur HUD ("Head Up Display") dit "tête haute".

Lorsqu'un aéronef qui est muni d'un tel affichage traverse une zone de turbulences, la position dudit vecteur vitesse sur l'écran de visualisation est affectée par les turbulences. De même, lorsque l'aéronef effectue un largage de charge, sa trajectoire est momentanément perturbée, ce qui entraîne une variation de la position du vecteur vitesse affiché. Toutefois, dans ces cas, au bout d'un temps relativement court, l'aéronef reprend sa trajectoire initiale.

Lorsque le pilote constate une variation de la position du vecteur vitesse sur l'écran, il est tenté d'agir sur un manche de commande, afin de ramener l'aéronef sur sa trajectoire initiale. Les perturbations considérées (turbulences, largage, etc ...) ayant un effet limité dans le temps sur la trajectoire de l'aéronef, une telle action du pilote a pour conséquence une modification durable de cette trajectoire, c'est-à-dire un effet contraire à l'effet souhaité. Le pilote doit, dans ce cas, effectuer une seconde action sur le manche, de sens opposé au sens de sa première action, afin de ramener l'aéronef sur sa trajectoire initiale. Dans certaines situations, notamment lors de la traversée d'une zone de turbulences, cette seconde action peut entraîner une correction trop importante de la trajectoire. D'autres actions sur le manche sont alors nécessaires pour réussir à stabiliser l'aéronef sur la trajectoire souhaitée.

Bien entendu, un tel phénomène, qui peut être assimilé à un "pompage piloté" doit être évité, car il peut notamment entraîner une fatigue accélérée de la structure de l'aéronef et il accapare l'attention du pilote dans des phases de vol où celui-ci peut être amené à entreprendre d'autres actions.

Une solution connue permettant de remédier à ce problème consiste à filtrer l'affichage du vecteur vitesse au moyen d'un filtre passe-bas ayant une constante de temps comprise entre quelques dixièmes de seconde et quelques secondes. Cela permet d'éviter le phénomène précité, mais il en résulte un nouveau problème : lorsque le pilote souhaite modifier la trajectoire en agissant sur le manche de commande, ce filtre passe-bas induit un retard entre la modification de trajectoire résultant de l'action sur le manche de commande et la variation de l'affichage du vecteur vitesse sur l'écran. Ce manque de réactivité gêne l'appréciation par le pilote de l'effet de son action sur le manche de commande, ce qui rend la maîtrise d'une telle action très difficile. En effet, si le pilote agit, par exemple, trop longtemps sur le manche de commande, la trajectoire souhaitée risque d'être dépassée, ce qui peut aboutir à un "pompage piloté" comme celui décrit précédemment.

Par ailleurs, le document EP-0 366 164 propose une autre solution consistant à afficher soit un vecteur vitesse correspondant aux actions du pilote (vecteur vitesse commandé), soit le vecteur vitesse mesuré. Un dispositif de commutation permet d'afficher l'un ou l'autre de ces vecteurs vitesse. Dans des conditions "normales" de vol, correspondant à des plages prédéfinies de vitesse, d'angle d'incidence, de facteur de charge, etc ..., le vecteur vitesse commandé est affiché. En revanche, lorsque l'aéronef sort de ces conditions de vol "normales", le vecteur vitesse mesuré est affiché. Lors de la commutation entre ces deux vecteurs vitesse, afin de ne pas avoir de discontinuité de l'affichage, un filtrage est appliqué.

Cette solution connue présente toutefois des inconvénients. En particulier, deux informations différentes sont affichées avec un seul symbole, ce qui nécessite une logique de basculement entre ces deux informations, qui peut entraîner d'éventuels problèmes de transition, de choix pas toujours optimal entre l'une ou l'autre information, etc ...

La présente invention a pour objet de remédier à ces inconvénients. Elle concerne un procédé pour afficher un vecteur vitesse d'un aéronef, qui permet d'engendrer un affichage :

- qui reste stable, même dans le cas de perturbations momentanées de la trajectoire dudit aéronef, dues par exemple à des turbulences ou des largages de charges ; et
- qui présente une réactivité élevée lors de variations de trajectoire consécutives à au moins une action d'un pilote sur un organe ou manche de commande de l'aéronef.

A cet effet, selon l'invention, ledit procédé selon lequel :

- on détermine, de façon automatique et répétitive, une valeur d'affichage représentant la valeur dudit vecteur vitesse à afficher et dépendant d'un premier terme qui comprend une valeur mesurée et filtrée du vecteur vitesse ; et
- on présente sur un écran de visualisation un signe caractéristique illustrant ledit vecteur vitesse, dont la position sur ledit écran de visualisation est représentative de ladite valeur d'affichage,

est remarquable en ce que, pour déterminer ladite valeur d'affichage :

- on détermine la valeur de la dérivée par rapport au temps d'un vecteur vitesse qui est commandé par le pilote dudit aéronef ;
- on calcule un second terme à partir de ladite valeur de la dérivée du vecteur vitesse commandé ; et
- on calcule la somme desdits premier et second termes de manière à former ladite valeur d'affichage.

Ainsi, grâce à l'invention, on peut remédier aux inconvénients précités. En effet :

- ledit premier terme qui prend en compte une valeur filtrée du vecteur vitesse (effectif) mesuré, permet d'obtenir un affichage stable du vecteur vitesse, même en cas de perturbations momentanées de la trajectoire ; et
- ledit second terme qui prend en compte la dérivée du vecteur vitesse commandé, garantit une réactivité appropriée et élevée de l'affichage du vecteur vitesse, lors de variations de la trajectoire dues à des actions du pilote, notamment sur un manche de commande.

De plus, grâce à la prise en compte permanente (par l'intermédiaire d'une sommation) de ces deux termes, et donc du vecteur vitesse mesuré et du vecteur vitesse commandé, aucune logique de transition n'est nécessaire, à la différence de la solution proposée par le document EP-0 366 164 précité.

De façon avantageuse, on calcule :

- ledit premier terme $\gamma 1$ à partir de l'expression suivante :

$$\gamma 1 = [1/(1 + \tau 1.s)].\gamma mes$$

dans laquelle :

    . s est la transformée de Laplace ;
    . $\tau 1$ est une constante de temps prédéterminée ; et
    . ymes représente le vecteur vitesse mesuré ; et

- ledit second terme y2 à partir de l'expression suivante :

$$\gamma 2 = [\tau 2/(1 + \tau 3.s)].\gamma dérivée$$

dans laquelle :

    . s est la transformée de Laplace ;
    . $\tau 2$ et $\tau 3$ sont des constantes de temps prédéterminées ; et
    . $\gamma$dérivée représente la dérivée du vecteur vitesse commandé par le pilote.

Selon l'invention, les constantes de temps $\tau 1$, $\tau 2$ et $\tau 3$ peuvent être déterminées en fonction de divers paramètres, en particulier en fonction de la masse de l'aéronef. Ces constantes de temps peuvent bien entendu être différentes les unes des autres. Toutefois, dans un mode de réalisation simplifié, lesdites constantes de temps $\tau 1$, $\tau 2$ et $\tau 3$ sont égales.

Par ailleurs, avantageusement, pour déterminer la composante de la valeur d'affichage selon une (première) direction verticale, la dérivée du vecteur vitesse commandé est déterminée en prenant en compte l'une des commandes suivantes :

- la commande du facteur de charge de l'aéronef ;
- la commande de la pente de l'aéronef ; et
- la commande de la dérivée de la pente de l'aéronef.

En prenant en compte la commande du facteur de charge de l'aéronef, on calcule de préférence la dérivée $\gamma$dérivée du vecteur vitesse commandé $\gamma$com à partir de la variation commandée $\Delta$Nzpil du facteur de charge, en utilisant l'expression suivante :

$$\gamma dérivée = (g/V).\Delta Nzpil$$

dans laquelle :

- g est l'accélération de la pesanteur ; et
- V est la vitesse de l'aéronef.

Par ailleurs, de façon avantageuse, pour déterminer la composante de la valeur d'affichage selon une seconde direction qui est latérale à l'aéronef et orthogonale à ladite direction verticale, la dérivée du vecteur vitesse commandé est déterminée à partir de la commande du taux de roulis (vitesse angulaire sur l'axe de roulis) de l'aéronef.

La présente invention concerne également un dispositif pour afficher un vecteur vitesse d'un aéronef et mettre en oeuvre le procédé précité.

Selon l'invention, ledit dispositif du type comportant :

- un premier moyen pour mesurer la valeur effective du vecteur vitesse de l'aéronef ;
- une unité de calcul pour déterminer, de façon automatique et répétitive, une valeur d'affichage représentant la valeur du vecteur vitesse à afficher, ladite unité de calcul comprenant un moyen de filtrage qui filtre la valeur mesurée par ledit premier moyen de manière à former un premier terme ; et
- une unité d'affichage pour présenter sur un écran de visualisation un signe caractéristique illustrant ledit vecteur vitesse, dont la position sur ledit écran de visualisation est représentative de ladite valeur d'affichage,

est remarquable en ce qu'il comporte, de plus, un second moyen pour déterminer la dérivée par rapport au temps d'un vecteur vitesse commandé par un pilote de l'aéronef, et en ce que ladite unité de calcul comprend de plus :

- un moyen de calcul qui détermine un second terme à partir de ladite dérivée du vecteur vitesse commandé ; et
- un sommateur qui fait la somme desdits premier et second termes de manière à former ladite valeur d'affichage.

La présente invention concerne par ailleurs un aéronef, en particulier un avion de transport civil, qui est muni du dispositif précité.

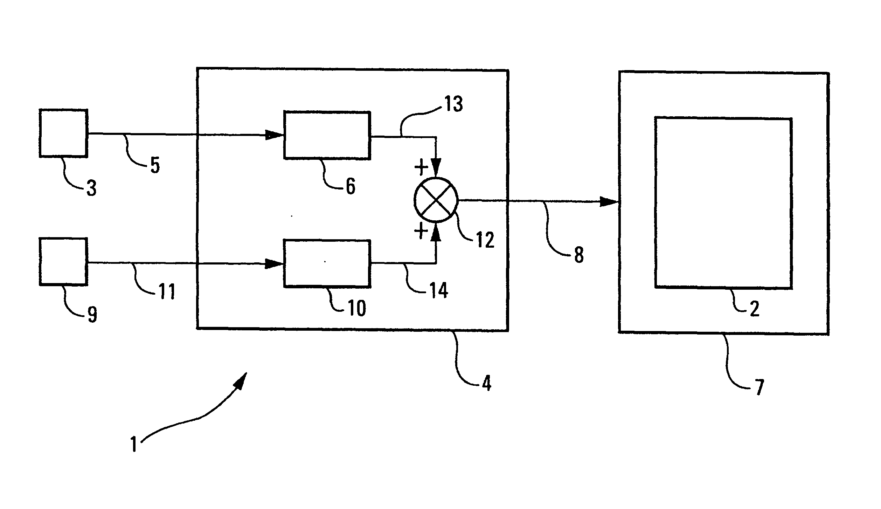

L'unique figure du dessin annexé fera bien comprendre comment l'invention peut être réalisée. Cette figure représente le schéma synoptique d'un dispositif conforme à l'invention.

Le dispositif 1 conforme à l'invention et représenté schématiquement sur la figure est embarqué sur un aéronef, par exemple un avion de transport, non représenté, et est destiné à afficher un vecteur vitesse de l'aéronef sur un écran de visualisation 2 de ce dernier, par exemple un écran du tableau de bord ou d'un viseur "tête haute" HUD ("Head Up Display").

Ledit dispositif 1 comporte, de façon connue :

- un moyen 3, de type usuel, pour mesurer la valeur effective du vecteur vitesse de l'aéronef ;
- une unité de calcul 4 pour déterminer, de façon automatique et répétitive, une valeur d'affichage γaff représentant la valeur du vecteur vitesse à afficher. Ladite unité de calcul 4 est reliée au moyen 3 par une liaison 5 et comprend un moyen de filtrage 6, précisé ci-dessous, qui filtre la valeur mesurée par ledit moyen 3 de manière à former un premier terme γ1 ; et
- une unité d'affichage 7, qui est reliée par une liaison 8 à l'unité de calcul 4, qui comprend l'écran de visualisation 2 et qui est destinée à présenter sur cet écran de visualisation 2 un signe caractéristique illustrant ledit vecteur vitesse, dont la position sur ledit écran de visualisation 2 est représentative de ladite valeur d'affichage γaff.

Dans le cadre de la présente invention, le filtrage (indiqué précédemment) du vecteur vitesse mesuré concerne une action qui consiste à filtrer la valeur du vecteur vitesse mesuré au moyen d'un filtre passe-bas (ayant une constante de temps comprise, par exemple, entre quelques dixièmes de seconde et quelques secondes), pour rendre cette valeur insensible à des perturbations momentanées (par exemple inférieure à quelques [3, 4, ...] secondes) de la trajectoire de l'aéronef.

Selon l'invention, ledit dispositif 1 comporte de plus un moyen 9, de type usuel, pour déterminer la dérivée (par rapport au temps) d'un vecteur vitesse (commandé) qui est commandé par un pilote de l'aéronef, et ladite unité de calcul 4 comprend de plus :

- un moyen de calcul 10 qui est relié par une liaison 11 au moyen 9 et qui détermine un second terme γ2 à partir de ladite dérivée du vecteur vitesse commandé ; et
- un sommateur 12 qui est relié par des liaisons 13 et 14 respectivement au moyen de filtrage 6 et au moyen de calcul 10 et qui fait la somme desdits premier et second termes de manière à former ladite valeur d'affichage γaff.

Ainsi, grâce à l'invention, la valeur d'affichage γaff qui est utilisée pour réaliser l'affichage comprend lesdits premier et second termes γ1 et γ2 qui sont tels que :

- ledit premier terme γ1 qui prend en compte une valeur filtrée du vecteur vitesse (effectif) mesuré, permet d'obtenir un affichage stable du vecteur vitesse, même en cas de perturbations momentanées de la trajectoire, comme indiqué précédemment ; et simultanément
- ledit second terme γ2 qui prend en compte la dérivée du vecteur vitesse commandé, garantit une réactivité appropriée et élevée de l'affichage du vecteur vitesse, lors de variations de la trajectoire dues à des actions du pilote, notamment sur un manche de commande, et ceci malgré le filtrage précité qui est prévu selon l'invention (mais qui est limité audit premier terme γ1).

De plus, grâce à la prise en compte permanente (par l'intermédiaire du sommateur 12) de ces deux termes γ1 et γ2, et donc du vecteur vitesse mesuré et du vecteur vitesse commandé, aucune logique de transition n'est nécessaire, à la différence par exemple de la solution proposée par le document EP-0 366 164 précité.

Dans un mode de réalisation préféré, le moyen 6 calcule ledit premier terme γ1 à partir de l'expression suivante :

$$\gamma 1 \ = \ [1/(1+\tau 1.s)].\gamma\text{mes}$$

dans laquelle :

- s est la transformée de Laplace ;
- τ1 est une constante de temps prédéterminée ; et
- γmes représente le vecteur vitesse mesuré.

De plus, de préférence, ledit moyen 10 calcule ledit second terme γ2 à partir de l'expression suivante :

$$\gamma 2 \ = \ [\tau 2/(1+\tau 3.s)].\gamma\text{dérivée}$$

dans laquelle :

- s est la transformée de Laplace ;
- τ2 et τ3 sont des constantes de temps prédéterminées ; et
- γdérivée représente la dérivée du vecteur vitesse γcom qui est commandé par le pilote.

Dans ce cas, la valeur d'affichage yaff qui est transmise par l'unité de calcul 4 à l'unité d'affichage 7 et qui est formée par la somme desdits premier et second termes γ1 et γ2, s'écrit :

$$\gamma\text{aff} \ = \ [1/(1+\tau 1.s)].\gamma\text{mes} + [\tau 2/(1+\tau 3.s)].\gamma\text{dérivée.}$$

Selon l'invention, les constantes de temps τ1, τ2 et τ3 peuvent être déterminées en fonction de divers paramètres, en particulier en fonction de la masse de l'aéronef. Ces constantes de temps peuvent être différentes les unes des autres. Toutefois, dans un mode de réalisation simplifié, lesdites constantes de temps τ1, τ2 et τ3 sont considérées comme égales.

On notera que des résultats satisfaisants sont, notamment, obtenus avec une constante de temps de filtrage τ1 sensiblement égale à 0,6 seconde et des constantes de temps τ2 et τ3 sensiblement égales à 2 secondes, dans le cas d'un avion lourd ou moyennement lourd, par exemple un avion de transport.

Par ailleurs, la valeur γdérivée est déterminée, en fonction des consignes (ou commandes) entrées par le pilote, notamment au moyen d'un manche de commande usuel de l'aéronef. Selon l'axe considéré, ces consignes peuvent être exprimées dans des unités différentes. Ainsi, à titre d'exemple non limitatif, selon l'axe vertical z d'un repère lié à l'aéronef (pente verticale de l'aéronef), lesdites consignes peuvent être entrées en facteur de charge Nz, en dérivée de pente, en pente, etc ... Lorsque la consigne selon cet axe z est exprimée en dérivée de pente, la valeur de γdérivée est égale à cette consigne. Lorsqu'elle est exprimée en pente, la valeur de γdérivée est égale à la dérivée de ladite consigne.

Lorsqu'elle est exprimée dans une autre unité, il convient de la convertir. Par exemple, dans le cas où elle correspond à un facteur de charge Nz, on peut la convertir comme indiqué ci-après.

On sait que la dérivée $\gamma'$ du vecteur vitesse est sensiblement égale à la valeur suivante :

$$\gamma' \approx (g/V).\Delta Nz$$

où $\Delta Nz$ est la variation du facteur de charge Nz, g est l'accélération de la pesanteur et V est la vitesse de l'aéronef.

On en déduit l'expression :

$$\gamma\text{dérivée} \approx (g/V).\Delta Nzpil$$

dans laquelle $\Delta Nzpil$ représente la variation du facteur de charge qui est commandée par le pilote et qui correspond au déplacement du manche (ou organe) de commande.

Dans ce mode de réalisation préféré, on a donc pour l'axe z :

* $\gamma\text{aff}=[1/(1 + \tau 1.s)].\gamma\text{mes} + [\tau 2/(1 + \tau 3.s)].(g/V).\Delta Nzpil$ ; ou
* si $\tau 1=\tau 2=\tau 3= \tau$ :

$$\gamma\text{aff} = [1/(1 + \tau.s)].\gamma\text{mes} + [\tau/(1 + \tau.s)].(g/V).\Delta Nzpil.$$

Selon l'axe y (qui est latéral à l'aéronef et orthogonal à l'axe vertical z) d'un repère lié à l'aéronef (correspondant aux paramètres latéraux de l'aéronef, notamment : route, dérapage, roulis), les consignes entrées par le pilote sont, de préférence, exprimées en terme de taux de roulis, sans que cela soit limitatif. Ce taux de roulis est une vitesse angulaire sur l'axe de roulis, ce qui permet de déterminer à tout instant l'angle de roulis de l'aéronef. Un angle de roulis non nul entraîne un virage de l'aéronef et les lois de la mécanique du vol permettent de calculer en conséquence une accélération Ay selon ledit axe y. En terme d'unité, une accélération est homogène à un facteur de charge. De façon analogue à l'exemple précédent de transformation du facteur de charge Nz en une valeur $\gamma$dérivée selon l'axe z, cette accélération Ay peut être transformée en une valeur $\gamma$dérivée selon l'axe y.

Par ailleurs, selon l'axe x (qui représente l'axe longitudinal de l'aéronef et qui est donc orthogonal aux axes z et y) d'un repère lié à l'aéronef, les consignes entrées par le pilote correspondent essentiellement à la poussée des moteurs, commandée par exemple au moyen de la manette de gaz. Cette poussée entraîne une accélération Ax selon l'axe longitudinal x de l'aéronef, laquelle peut être transformée en une valeur $\gamma$dérivée selon cet axe x, de façon similaire aux transformations précitées relatives aux axes y et z.

On notera de plus que, dans le cas d'un viseur HUD, l'axe x étant perpendiculaire au plan dudit viseur HUD, il est possible, afin de garantir la clarté et la lisibilité de l'affichage, de ramener les paramètres liés à cet axe x à un affichage selon l'axe z par une transformation usuelle dite de "pente totale".

**Revendications**

1. Procédé pour afficher un vecteur vitesse d'un aéronef, procédé selon lequel:

   - on détermine, de façon automatique et répétitive, une valeur d'affichage représentant la valeur dudit vecteur vitesse à afficher et dépendant d'un premier terme 1 qui comprend une valeur mesurée et filtrée du vecteur vitesse ; et
   - on présente sur un écran de visualisation (2) un signe caractéristique illustrant ledit vecteur vitesse, dont la position sur ledit écran de visualisation (2) est représentative de ladite valeur d'affichage,

   **caractérisé en ce que**, pour déterminer ladite valeur d'affichage:

   - on détermine la valeur de la dérivée par rapport au temps d'un vecteur vitesse qui est commandé par le pilote dudit aéronef ;

- on calcule un second terme 2 à partir de ladite valeur de la dérivée du vecteur vitesse commandé; et
- on calcule la somme desdits premier et second termes de manière à former ladite valeur d'affichage.

**2.** Procédé selon la revendication 1,
**caractérisé en ce que** l'on calcule ledit premier terme γ1 à partir de l'expression suivante :

$$\gamma1 = [1/(1 + \tau1.s)].\gamma mes$$

dans laquelle :

- s est la transformée de Laplace ;
- τ1 est une constante de temps prédéterminée ; et
- γmes représente le vecteur vitesse mesuré.

**3.** Procédé selon l'une quelconque des revendications 1 et 2, **caractérisé en ce que** l'on calcule ledit second terme γ2 à partir de l'expression suivante :

$$\gamma2 = [\tau2/(1 + \tau3.s)].\gamma dérivée$$

dans laquelle :

- s est la transformée de Laplace ;
- τ2 et τ3 sont des constantes de temps prédéterminées ; et
- γdérivée représente la dérivée du vecteur vitesse commandé par le pilote.

**4.** Procédé selon les revendications 2 et 3,
**caractérisé en ce que** lesdites constantes de temps τ1, τ2 et τ3 sont égales.

**5.** Procédé selon l'une quelconque des revendications précédentes,
**caractérisé en ce que**, pour déterminer la composante de la valeur d'affichage selon une direction verticale, la dérivée du vecteur vitesse commandé est déterminée en prenant en compte l'une des commandes suivantes :

- la commande du facteur de charge de l'aéronef ;
- la commande de la pente de l'aéronef ; et
- la commande de la dérivée de la pente de l'aéronef.

**6.** Procédé selon l'une des revendications 3 et 5,
**caractérisé en ce que** la dérivée γdérivée du vecteur vitesse commandé est calculée à partir de la variation commandée du facteur de charge ΔNzpil de l'aéronef, en utilisant l'expression suivante :

$$\gamma dérivée = (g/V).\Delta Nzpil$$

dans laquelle :

- g est l'accélération de la pesanteur ; et
- V est la vitesse de l'aéronef.

**7.** Procédé selon l'une quelconque des revendications précédentes, **caractérisé en ce que**, pour déterminer la composante de la valeur d'affichage selon une direction qui est latérale à l'aéronef et orthogonale à la direction verticale, la dérivée du vecteur vitesse commandé est déterminée à partir de la commande du taux de roulis.

**8.** Dispositif pour afficher un vecteur vitesse d'un aéronef, ledit dispositif (1) comportant :

- un premier moyen (3) pour mesurer la valeur effective du vecteur vitesse de l'aéronef ;
- une unité de calcul (4) pour déterminer, de façon automatique et répétitive, une valeur d'affichage représentant la valeur du vecteur vitesse à afficher, ladite unité de calcul (4) comprenant un moyen de filtrage (6) qui filtre la valeur mesurée par ledit premier moyen (3) de manière à former un premier terme ; et
- une unité d'affichage (7) pour présenter sur un écran de visualisation (2) un signe caractéristique illustrant ledit vecteur vitesse, dont la position sur ledit écran de visualisation (2) est représentative de ladite valeur d'affichage,

**caractérisé en ce qu'**il comporte, de plus, un second moyen (9) pour déterminer la dérivée par rapport au temps d'un vecteur vitesse commandé par un pilote de l'aéronef, et **en ce que** ladite unité de calcul (4) comprend de plus :

- un moyen de calcul (10) qui détermine un second terme à partir de ladite dérivée du vecteur vitesse commandé ; et
- un sommateur (12) qui fait la somme desdits premier et second termes de manière à former ladite valeur d'affichage.

9. Aéronef,
   **caractérisé en ce qu'**il comporte un dispositif d'affichage tel que celui spécifié sous la revendication 8.

**Claims**

1. A method for displaying a velocity vector of an aircraft, a method in which:

   - a display value representing the value of said velocity vector to be displayed and dependent on a first term $\gamma_1$ which comprises a measured and filtered value of the velocity vector is determined automatically and repetitively; and
   - a characteristic sign illustrating said velocity vector, the position of which on a display screen (2) is representative of said display value, is presented on said display screen (2),

   **characterized in that**, in order to determine said display value:

   - the value of the time derivative of a velocity vector which is controlled by the pilot of said aircraft is determined;
   - a second term $\gamma_2$ is calculated from said value of the derivative of the controlled velocity vector; and
   - the sum of said first and second terms is calculated so as to form said display value.

2. The method as claimed in claim 1,
   **characterized in that** said first term $\gamma_1$ is calculated from the following expression:

$$\gamma_1 = [1/(1+\tau_1 \times s)] \times \gamma_{mes}$$

   in which:

   - s is the Laplace transform;
   - $\tau_1$ is a predetermined time constant; and
   - $\gamma_{mes}$ represents the measured velocity factor.

3. The method as claimed in any one of claims 1 and 2,
   **characterized in that** said second term $\gamma_2$ is calculated from the following expression:

$$\gamma_2 = [\tau_2/(1+\tau_3 \times s)] \times \gamma_{der}$$

in which:

- s is the Laplace transform;
- $\tau_2$ and $\tau_3$ are predetermined time constants; and
- $\gamma_{der}$ represents the derivative of the velocity vector controlled by the pilot.

4. The method as claimed in claims 2 and 3,
**characterized in that** said time constants $\tau_1$, $\tau_2$ and $\tau_3$ are equal.

5. The method as claimed in any one of the preceding claims,
**characterized in that**, in order to determine the component of the display value in a vertical direction, the derivative of the controlled velocity vector is determined by taking account of one of the following controls:

- control of the load factor of the aircraft;
- control of the inclination of the aircraft; and
- control of the derivative of the inclination of the aircraft.

6. The method as claimed in claims 3 and 5,
**characterized in that** the derivative $\gamma_{der}$ of the controlled velocity vector is calculated from the controlled variation of the load factor $\Delta N_{zpil}$ of the aircraft, by using the following expression:

$$\gamma_{der} = (g/V) \times \Delta N_{zpil}$$

in which:

- g is the acceleration due to gravity; and
- V is the velocity of the aircraft.

7. The method as claimed in any one of the preceding claims ,
**characterized in that**, in order to determine the component of the display value in a direction which is lateral to the aircraft and orthogonal to the vertical direction, the derivative of the controlled velocity vector is determined from the control of the roll rate.

8. A device for displaying a velocity vector of an aircraft, said device (1) comprising:

- a first means (3) for measuring the effective value of the velocity vector of the aircraft;
- a computing unit (4) for determining, automatically and repetitively, a display value representing the value of the velocity vector to be displayed, said computing unit (4) comprising a filtering means (6) which filters the value measured by said first means (3) so as to form a first term; and
- a display unit (7) for presenting on a display screen (2) a characteristic sign illustrating said velocity vector whose position on said display screen (2) is representative of said display value,

**characterized in that** it comprises, in addition, a second means (9) for determining the time derivative of a velocity vector controlled by an aircraft pilot, and **in that** said computing unit (4) further comprises:

- a computing means (10) which determines a second term from said derivative of the controlled velocity vector; and
- a summator (12) which sums said first and second terms so as to form said display value.

9. An aircraft,
**characterized in that** it comprises a display device such as the one specified in claim 8.

**Patentansprüche**

1. Verfahren zum Anzeigen eines Geschwindigkeitsvektors eines Flugzeugs, wobei bei dem Verfahren:

   - automatisch und wiederholt ein Anzeigewert bestimmt wird, der den Wert des anzuzeigenden Geschwindigkeitsvektors repräsentiert und von einem ersten Term $\gamma 1$ abhängt, der einen gemessenen und gefilterten Wert des Geschwindigkeitsvektors umfasst und
   - auf einem Anzeigebildschirm (2) ein den Geschwindigkeitsvektor darstellendes Kennzeichen gezeigt wird, dessen Position auf dem Anzeigebildschirm (2) für den Anzeigewert repräsentativ ist,

   **dadurch gekennzeichnet, dass** zum Bestimmen des Anzeigewerts:

   - der Wert der Ableitung nach der Zeit eines von dem Piloten des Flugzeugs angesteuerten Geschwindigkeitsvektors bestimmt wird;
   - aus dem Wert der Ableitung des angesteuerten Geschwindigkeitsvektor ein zweiter Term $\gamma 2$ berechnet wird und
   - zur Bildung des Anzeigewerts die Summe des ersten und zweiten Terms berechnet wird.

2. Verfahren nach Anspruch 1,
   **dadurch gekennzeichnet, dass** der erste Term $\gamma 1$ aus dem folgenden Ausdruck berechnet wird:

   $$\gamma 1 = [1/(1 + \tau 1.s)].\gamma \text{mes}$$

   in dem:

   - s die Laplace-Transformierte ist,
   - $\tau 1$ eine vorgegebene Zeitkonstante ist und
   - $\gamma$mes den gemessenen Geschwindigkeitsvektor repräsentiert.

3. Verfahren nach Anspruch 1 oder 2,
   **dadurch gekennzeichnet, dass** der zweite Term $\gamma 2$ aus dem folgenden Ausdruck berechnet wird:

   $$\gamma 2 = [\tau 2/(1 + \tau 3.s)].\gamma \text{dérivée}$$

   in dem:

   - s die Laplace-Transformierte ist,
   - $\tau 2$ und $\tau 3$ vorgegebene Zeitkonstanten sind und
   - $\gamma$dérivée die Ableitung des von dem Piloten des Flugzeugs angesteuerten Geschwindigkeitsvektors repräsentiert.

4. Verfahren nach den Ansprüchen 2 und 3,
   **dadurch gekennzeichnet, dass** die Zeitkonstanten $\tau 1$, $\tau 2$ und $\tau 3$ gleich sind.

5. Verfahren nach einem der vorhergehenden Ansprüche,
   **dadurch gekennzeichnet, dass** zum Bestimmen der Komponente des Anzeigewerts in einer vertikalen Richtung die Ableitung des angesteuerten Geschwindigkeitsvektor unter Berücksichtigung einer der folgenden Steuerungen bestimmt wird:

   - der Steuerung des Lastvielfachen des Flugzeugs,
   - der Steuerung der Steigung des Flugzeugs und
   - der Steuerung der Ableitung der Steigung des Flugzeugs.

6. Verfahren nach Anspruch 3 oder 5,

**dadurch gekennzeichnet, dass** die Ableitung γdérivée des angesteuerten Geschwindigkeitsvektors ausgehend von der angesteuerten Änderung des Lastvielfachen ΔNzpil des Flugzeugs unter Verwendung des folgenden Ausdrucks berechnet wird:

$$\gamma\text{dérivée} = (g/V).\Delta Nzpil$$

in dem:

    - g die Erdbeschleunigung ist und
    - V die Geschwindigkeit des Flugzeugs ist.

**7.** Verfahren nach einem der vorhergehenden Ansprüche,
**dadurch gekennzeichnet, dass**, zum Bestimmen der Komponente des Anzeigewerts in einer Richtung, die seitlich zu dem Flugzeug und orthogonal zur Vertikalrichtung verläuft, die Ableitung des angesteuerten Geschwindigkeitsvektors ausgehend von der Steuerung der Rollrate bestimmt wird.

**8.** Einrichtung zum Anzeigen eines Geschwindigkeitsvektors eines Flugzeugs, wobei die Einrichtung (1) umfasst:

    - ein erstes Mittel (3), um den Istwert des Geschwindigkeitsvektors des Flugzeugs zu messen;
    - eine Recheneinheit (4) zum automatischen und wiederholten Bestimmen eines Anzeigewerts, der den Wert des anzuzeigenden Geschwindigkeitsvektors repräsentiert, wobei die Recheneinheit (4) ein Filtermittel (6) umfasst, das den von dem ersten Mittel (3) gemessenen Wert zur Bildung eines ersten Terms filtert und
    - eine Anzeigeeinheit (7), um auf einem Anzeigebildschirm (2) ein den Geschwindigkeitsvektor darstellendes Kennzeichen anzuzeigen, dessen Position auf dem Anzeigebildschirm (2) für den Anzeigewert repräsentativ ist,

**dadurch gekennzeichnet, dass** sie außerdem ein zweites Mittel (9) umfasst, um die Ableitung nach der Zeit eines von einem Piloten des Flugzeugs angesteuerten Geschwindigkeitsvektors zu bestimmen und dadurch, dass die Recheneinheit (4) weiterhin umfasst:

    - ein Berechnungsmittel (10), das aus der Ableitung des angesteuerten Geschwindigkeitsvektor einen zweiten Term bestimmt und
    - einen Summierer (12), der zur Bildung des Anzeigewerts den ersten und den zweiten Term summiert.

**9.** Flugzeug,
**dadurch gekennzeichnet, dass** es eine Anzeigeeinrichtung wie die unter Anspruch 8 spezifizierte umfasst.

**EP 1 310 768 B1**

**Documents brevets cités dans la description**

- EP 0366164 A